# EUROPEAN PATENT APPLICATION

(11) **EP 4 621 392 A1**
(43) Date of publication of application: **24.09.2025**
(21) Application number: 25164778.0
(22) Date of filing: 19.03.2025
(51) Int. Cl.: G01N 21/89, G01N 21/84, G06N 20/00, G06T 7/00, G06V 10/70, G01N 21/88

(54) **ANOMALY DETECTION SYSTEM AND METHOD FOR DETECTING ANOMALIES**

(30) Priority: 21.03.2024 DE 102024108062
(71) Applicant: Veridos GmbH, 10969 Berlin (DE)
(72) Inventor: BORDOLI, Letizia Cecilia Amelia, 10969 Berlin (DE); KHALID, Haroon, 10969 Berlin (DE); ELLATH MEETHAL, Rishith, 10969 Berlin (DE)
(74) Representative: Ter Meer Steinmeister & Partner

(57) **Abstract**

The invention concerns an anomaly detection system configured to detect anomalies on the surface of an object via a contact image sensor linescan camera, wherein the capturing speed is adjusted to the movement speed of the object and the acquired image data is analysed with a machine learning model to provide information on the detected anomaly on a user interface, provide information on a necessary action on a user interface and provide a command on a necessary action, wherein the necessary action is based on the detected anomaly. The invention further concerns an anomaly detection method.

## Description

The invention is related to an anomaly detection system and a method for detecting anomalies. Such a system and/or such a method may preferably be used for detecting anomalies on a lamination belt. The anomalies may represent defects on the lamination belt.

Document US 6,748,124 B1 discloses an image processing system. The system is arranged above a conveyor belt and includes illumination means and an optical system for imaging an image of the surface of the object on a line sensor. The illumination means and the optical system are moved relative to the object while the clock rate supplied to the line sensor is controlled adjusting the image signal transfer speed of the line sensor to match the processing speed of the image processing system.

Detecting anomalies on an object is particularly important in a lamination process. Defects on the objects to be laminated must be detected as anomalies and a decision on necessary actions must be made to reduce the production of scrap generated. For example, when using a lamination system with lamination belts, defects on the belt such as glue marks, scratches or small paper residuals may be transferred onto the objects to be laminated. For example, glue that sticks to the lamination belt may create a black mark on the laminated object, e.g. a data page. This would then lead to generation of scrap and has to be avoided.

A solution is to manually check the object or the lamination belt, assess the detected anomalies such as defects and decide on necessary actions such as cleaning the object or the lamination belt or changing parameters of the process. However, this is time consuming and leads to downtime of the utilised machines. Simply recording a surface of an object or a belt and detecting the defects as anomalies poses additionally problems such as spatial limitations and difficulties recording images in a sufficient quality according to the used method. When recording a moving object such as a lamination belt, the varying movement speed and the surface characteristics of the object may pose additional difficulties. Moreover, conventional area scan sensors or line scan sensors are not suitable for monitoring in a setting with a reflective surface of the object and the necessary resolution to detect small anomalies. They must be arranged at a substantial distance to the object to be recorded and require illumination means, which may further create unwanted reflections.

CN 2 08 366 870 U relates to a label printing defect on-line measuring device that comprises a CIS sensor.

DE 10 2014 011 268 A1 relates to a device configured to optically detect defects on an object, in particular micro holes in a material film, using a focused line laser.

It is therefore a task of the invention to provide a system and a method to detect anomalies on an object which solves the afore-mentioned problems. In particular, it is an object of the invention to allow detecting anomalies on an object and providing information on the detected anomalies to a user. It is a further object of the invention to provide information on necessary actions based on the detected anomalies to a user or provide a signal corresponding to necessary actions.

These tasks are solved by an anomaly recognition system and a method for detecting anomalies according to the independent claims. Preferred embodiments of the solutions are defined by the dependent claims.

An anomaly recognition system comprises a contact image sensor linescan camera to be arranged above an object and configured to record image data of the surface of the object, wherein the contact image sensor linescan camera includes an image sensor and illumination means; a height adjustable mount by which at least the contact image sensor linescan camera is arranged above the object; an encoder configured to record the movement speed of the object; a frame grabber coupled to the encoder and the contact image sensor linescan camera, wherein the frame grabber is configured to receive information on the movement speed of the object from the encoder and is further configured to control the contact image sensor linescan camera to record image data when the object is moving, and, when the object is moving, to adjust a capturing speed of the contact image sensor linescan camera according to the movement speed of the object; image processing means configured to process the image data provided by the contact image sensor linescan camera and to detect an anomaly in the image data with a trained machine learning model and/or with a rule-based model and configured to provide information on the detected anomaly on a user interface and/or provide information on a necessary action on a user interface and/or provide a command on a necessary action, wherein the necessary action is based on the detected anomaly.

When the object is not moving, the frame grabber may be configured to control the contact image sensor linescan camera to stop recording image data.

The capturing speed of the contact image sensor linescan camera may refer to a speed at which triggers are provided to the contact image sensor linescan camera. The frame grabber may configure the contact image sensor linescan camera to capture a line with the contact image sensor linescan camera whenever a trigger comes. The trigger may be provided by the encoder and frame grabber which are configured in accordance with the movement speed of the object. Such configuration ensures that there is no oversampling or undersampling of the object. Oversampling occurs when the contact image sensor linescan camera captures the same line multiple times because of overtriggering. Undersampling occurs when the trigger is slower than the movement speed of the object. Accordingly, increasing the capturing speed of the contact image sensor linescan camera may correspond to reducing a time interval between two consecutive triggers. Reducing the capturing speed of the contact image sensor linescan camera may correspond to increasing the time interval between two consecutive triggers.

The frame grabber may be configured to provide a plurality of triggers to the the contact image sensor linescan camera at high speed and/ or variable speed as synchronized with the movement speed of the object. The frame grabber may be further configured to transfer the captured image data to the image processing means. The image data may be high-resolution image data.

The detected anomaly may represent a defect on a surface of the object. A surface of an object is considered to be a main surface directed towards the contact image sensor linescan camera - in the following also referred to as CISL camera.

The CISL camera is arranged very close to the object it records due to its design. To achieve such said close arrangement, a distance between the camera and the surface of the recorded object may be less than 50mm, preferably less then 30mm, more preferably less then 20mm, and most preferably 12 mm or lower than 10mm.

The CISL camera includes the contact image sensor (CIS), which is configured as a linescan sensor, and illumination means. Because the CISL camera is arranged close to the object surface to be recorded and includes its own illumination means, unwanted reflections on the surface of the object can be minimized or prevented, even if scanning a reflective object such as a lamination belt.

Furthermore, reflections of other objects in the surrounding of the CISL camera may be prevented and unwanted interference of light may also be reduced or prevented. This is also important as the CIS may provide image data as an image of the reflectivity of light and may easily be influenced by unwanted lighting. The CIS camera allows for a distortion free recording of image data as it comprises a 1:1 optics and is mounted directly above the object to be recorded.

The picture angle may be constant over its reading width as the sensor is as wide as the object to be recorded, for example, the sensor may be as wide as a belt recorded.

The height adjustable mount allows to adjust the distance of the CISL camera to the object and therefore enables the use of the anomaly recognition system - in the following mainly referred to as system - for varying objects or a varying object distance. The height adjustable mount may be controlled by the image processing means to adjust the height. This allows to change the height when the object distance is inadequate, or the image processing means detect a change in object distance.

Using a CISL camera reduces spatial requirements of the system. Due to its sensor type and integrated illumination means, the CISL camera needs very little space in comparison to conventional recording apparatuses or linescan cameras. This allows to use the system also in settings where the space for detecting anomalies is restricted, for example when detecting anomalies in a lamination system using lamination belts.

In the following the description refers to anomalies, however, the described details also apply to a single anomaly.

Because the recorded image data is processed and an anomaly or anomalies are detected by a trained machine learning model and/or by a rule-based model, the system may be used in different settings with adapted models according to the exact requirements of the setting. Detecting anomalies via models allows to interpret the detected anomalies and to classify them according to their type. Such types may be glue marks, scratches, or other defects on the surface of the object recorded. The CISL camera records image data based on the amount of light reflected from the recorded object. The anomaly may therefore be recorded as a change in reflectivity and/or a change in colour and thus the change of light reflected into the sensor. Each pixel may record this information and a change of the amount of light detected by a pixel may relate to an anomaly.

The image processing means are configured to detect an anomaly in the image data with a trained machine learning model and/or with a rule-based model. The trained machine learning model may be trained to detect an anomaly by detecting differences to image data without an anomaly and then classifying the anomaly. Alternatively, the trained machine learning model may be trained to directly detect an anomaly by detecting similarities to anomalies defined in the training data. This includes detecting a type of the anomaly relating to a type of defect. Moreover, the two alternative ways may also be realized by the rule-based method. The rule-based method may include rules to detect an anomaly by comparing differences in the recorded image data in comparison to image data without an anomaly and then classifying the detect anomaly. Or the rule-based method may include rules to directly detect an anomaly by comparing similarities in the recorded image data to a defined type of anomaly. The rule based-model may be based on a conventional rule-based computer algorithm wherein the trained machine learning model may be based on a data-driven machine learning algorithm. In the following, the term "detection" of an anomaly describes any of these two alternative ways used with any of the two models.

Used rules may include a recorded change in a certain pixel number or defined area relating to a size of the recorded change. For example, a rule may be to classify an area as a detected anomaly if a certain number of pixels or a certain area size show a defined change of colour or reflectivity. Rules may also include the pixel intensity which defines how bright a pixel is. Another aspect which may be part of a rule is the position of a recorded change on the object. Certain areas may be more relevant for detection of anomalies or may be ignored.

By providing information on the detected anomalies on a user interface, the user may recognize anomalies without having to manually inspect the object. This may reduce downtime of the machine the system is used on.

The object is recorded while moving and even with varying moving speed, the frame grabber controls the CISL camera to adjust its capturing speed and to ensure sufficient image quality for analysis by a model. As the image data is only recorded when the object is moving, a stop of the object, e.g. a stop of a belt, does not lead to incorrect multiple detections of anomalies which are arranged in the area covered by the CIS when the object is stopped. Moreover, the amount of data necessary to be processed and analysed is reduced. The frame grabber may be configured to synchronize a capturing speed of the CISL camera with the moving speed/movement speed of the object. Accordingly, when the moving speed of the object varies, the capturing speed of the CISL camera may vary correspondingly. For instance, when the moving speed of the object reduces, the frame grabber may be configured to reduce capturing speed, i. e., by increasing an time interval between consecutive triggers to capture a new image. Accordingly, the capturing frequency may reduce such that an overlap between adjacent sections of the object is reduced or even prevented. Similarly, when the moving speed of the object increases, the frame grabber may be configured to increase the capturing speed, i. e., by reduce the time interval between consecutive triggers to capture a new image such that undersampling of the object and thus an incomplete picture of the object may be avoided. Thus, adapting the capturing speed based on the moving speed of the object may ensure an image quality that is sufficient for subsequent analysis by the image processing means independent of the movement speed of the object. In particular, if the object is a rotating belt, adapting the capturing speed based on the moving speed of the object may ensure an image quality that is sufficient for subsequent analysis by the image processing means independent of the rotating speed of the rotating belt.

If the object to be recorded is a rotating belt, the anomaly detection system may be configured to recognize a full rotation of the belt, thus being able to also stop recording images or start analysing the image data, if the full surface of the belt has been recorded and processed.

Moreover, the system may be configured to recognize and record the position of recorded and/or analysed anomalies. This allows to use the system to check for existence of recognized anomalies after for example a cleaning process or a repair process. The image processing means and the used model may therefore also be configured to compare detected anomalies in at least two recordings of the same region of the object.

The image processing means are configured to process the image data provided by the CISL camera and provide the processed image data adapted to the model requirements. For example, the image processing means may be configured to divide the recorded object into sections and further divide the image data of the sections into subsections before analysis with a model. The image processing means may be configured to detect anomalies in each subsection of the sections and may be configured to combine the results of each subsection and provide the combined information on a user interface.

According to an embodiment of the invention, the object is a belt. The belt may be a lamination belt or may be a conveyor belt. The belt or lamination belt may be rotating belts. The system therefore detects anomalies on the surface of the belt or lamination belt. The system may also be configured to detect anomalies on the belt or lamination belt and on the surface of an object arranged on the belt or lamination belt. Accordingly, the trained machine learning model and/or the rule-based model is configured to differentiate between the belt and the object on the belt. The anomalies on the belt may be defects on the belt such as glue marks, scratches, or small paper residuals.

According to an embodiment of the invention, the object is a rotating belt; the encoder is configured to pick up a motor signal of a motor which drives the belt; or the encoder is coupled to a rotating drum which guides and/or drives the belt. The rotating belt may be a lamination belt.

Depending on the type of used motor to drive the belt, the motor may provide a motor signal which provides information on the angular position or angular movement and therefore on the rotational speed of the motor defining the movement speed of the belt. The motor signal may be generated by an encoder of the motor. The encoder may therefore be constituted by this signal coupled to the frame grabber. The encoder may also be coupled to a rotating drum which guides and/or drives the belt. The rotating drum may be rotated by a motor or by the belt itself. The encoder may be a rotary encoder and may be of a mechanical, optical or magnetic type. The encoder and the rotating drum are configured to interact, allowing the encoder to record the change in rotational angle and provide this information to the frame grabber. For example, it may be configured to detect the angular position or movement of the rotating drum by a number of signals or ticks and convert this to an analog or digital signal provided to the frame grabber. The frame grabber is configured to calculate the movement speed of the belt according to the configuration of the elements moving the belt, e.g. the diameter of the rotating drum.

According to an embodiment of the invention, the encoder is configured to record the movement speed of the object from a surface of the object and the surface is provided with markings to be recorded by the encoder. For example, the encoder is configured to record the movement speed by dedicated markings provided on the surface of the object or by a textured surface of the object. It may be configured to convert this recorded information to an analog or digital signal provided to the frame grabber. The encoder may be arranged above the object by the height adjustable mount. This allows to adapt the system to a wide variety of use cases, only depending on the provision of a recordable surface of the object to be recorded. Moreover, this allows to configure the system with less components to be installed for initiation of the system. For example, the CISL camera, the height-adjustable mount, the encoder, the frame grabber and the image processing means may be arranged in one unit and the user interface may be part of this unit or may represent a second unit. The encoder may also be represented by the CISL camera.

According to an embodiment of the invention, the image processing means are further configured to provide the information and/or provide the command on the necessary action by processing the detected anomaly and deciding on the necessary action with a trained machine learning model and/or with a rule-based model.

The information and/or command on the necessary action may include instructions such as stopping the object, cleaning the object or changing parameters of the process applied. In the following the description also refers to actions, however, the described details also apply to a single action.

With a rule-based model, the image processing means may be configured to provide information on the detected anomaly on a user interface and/or provide information on a necessary action on a user interface and/or provide a command on a necessary action based on the detected anomaly by choosing an information to be provided or a command to be provided from a list according to a rule. For example, if the anomaly is classified or detected to a specific type, the image processing means may choose a corresponding entry in the list associated with this type according to the rule-based model. The list may include a number of different options which may be associated with the size and/or type of the detected anomaly. For example, if the detected anomaly is classified to be a glue mark, the rule-based model may prompt the image processing means to choose an entry associated with the type glue mark. This may be an information on the detected glue mark, a proposed necessary action, or a command. For example, in case the object is a lamination belt, the information on a necessary action may include cleaning the lamination belt, monitoring the anomaly detected or ignoring the anomaly detected. The command may for example be a command that is provided to a cleaning tool to clean the object.

Alternatively, or additionally, the trained machine learning model is trained to assess the anomalies detected and decide if an action is necessary and if it is, what kind of action is to be provided as information on the user interface and/or provided as a command. The machine learning model may be trained to the use case of the system. For example, in case the object is a lamination belt, the machine learning model may be trained to anomalies occurring on a lamination belt.

The image processing means may be configured to apply the machine learning model and/or the rule-based model to the results of anomaly detection of each section and/or subsection of the sections and may be configured to combine the results of each section and/or subsection and provide the combined information on a user interface. The image processing means may be configured to apply the models on the combined results of the anomaly detection of each section and/or subsection.

Using the machine learning model and/or the rule-based model greatly improves the accuracy and adequacy of the decided necessary action and helps to reduce downtime of the machine the system is used on. For example, the machine often does not have to be stopped to clean the object, as it is not necessary and the object may be cleaned in the next scheduled stop of the machine. In an exemplary case in which the object is a lamination belt, the belt only has to be stopped and cleaned out of order if the detected anomaly would affect an object to be laminated.

According to an embodiment of the invention, the machine learning model and/or the rule-based model which are used to provide the information and/or provide the command on the necessary action are the machine learning model and/or the rule-based model used to detect the anomaly. The machine learning model of such an embodiment may be trained to detect anomalies, assess them and decide on necessary actions. Moreover, a machine learning model may be used to detect the anomaly and a rule-based model may be used to provide the information and/or provide the command on the necessary action. The other way around, a rule-based model may be used to detect the anomaly and a machine learning model may be used to provide the information and/or provide the command on the necessary action.

The invention further concerns a method for detecting anomalies on an object. This method comprises the steps of recording the movement speed of an object; recording image data from the surface of the object with a contact image sensor linescan camera, wherein image data is recorded when the object is moving and wherein the capturing speed of the image data is adjusted according to the movement speed of the object; processing the image data; detecting an anomaly in the image data with a trained machine learning model and/or a rule-based model; providing information on the detected anomaly to a user and/or providing information on a necessary action to a user and/or providing a command on a necessary action, wherein the necessary action is based on the detected anomaly.

As the image data is recorded by a contact image sensor linescan camera (in the following also referred to as CISL camera), the image data is recorded as the amount of light detected by each pixel of the CISL camera which is based on the amount of light reflected by the object. As the CISL camera records close to the object surface and illuminates its recording area with its own illumination means, unwanted reflections on the surface of the object can be minimized or prevented, even when scanning a reflective surface such as a lamination belt. The recorded image data therefore includes areas of anomalies characterized by a difference in the amount of light reflected of an area of the object. Recording with a CISL camera also reduces spatial requirements of the system. This allows to apply the method also in settings where the space for detecting anomalies is restricted, for example when detecting anomalies in a lamination system using lamination belts.

Because the recorded image data is processed and anomalies are detected by a trained machine learning model and/or a rule-base model, the system may be used in different settings with adapted models according to the exact requirements of the setting. The anomaly may represent a defect on the surface of the object recorded. Detecting anomalies via the used models allows to interpret the detected anomalies and to classify them according to their type or to directly detect a defined type of anomaly. Such types may be glue marks, scratches, or other defects on the surface of the object to be detected. By providing information on the detected anomalies from image data recorded from a moving object, the user may recognize anomalies without having to manually inspect the object. This reduces downtime of the machine the method is used on.

Recording the image data while adjusting the capturing speed according to the movement speed of the object improves the quality of the recorded image data and ensures a successful and efficient analysis via any of the models. Adjusting the capturing speed also ensures that no area of the object to be recorded is either left out or recorded more often than necessary. As the image data is only recorded while the object is moving, the required data processing capacity the processing time are reduced. Moreover, a stop of the object, for example a stop of a belt, does not lead to incorrect multiple recordings of the same area of the object. These could unnecessarily increase the amount of data that needs to be processed and could lead to multiple detections of the same anomalies, depending on the image processing.

According to an embodiment of the invention, the step of providing information on the necessary action to a user and/or the step of providing a command on the necessary action includes processing the detected anomaly and deciding on the necessary action with a trained machine learning model and/or a rule-based model.

The information and/or the command on the necessary action may include instructions such as stopping the object, cleaning the object or changing parameters of the process applied. In the following the description also refers to actions, however, the described details also apply to a single action.

The step of providing information on the detected anomaly to a user and/or providing information on a necessary action to a user and/or providing a command on a necessary action, wherein the necessary action is based on the detected anomaly, may be performed by a rule-based model. For example, this includes choosing an information to be provided or a command to be provided from a list. For example, if the anomaly is classified to specific type, the step includes choosing a corresponding entry in the list associated with this type. The list may include several different options which may be associated with the size and/or type of the detected anomaly. For example, if the detected anomaly is classified to be a glue mark, the step would choose an entry associated with the type glue mark according to a defined rule. This may be an information on the detected glue mark, a proposed necessary action, or a command. For example, in case the object is a lamination belt, the information on a necessary action may include cleaning the lamination belt, monitoring the anomaly detected or ignoring the anomaly detected. The command may for example be a command that is provided to a cleaning tool to clean the defect from the object.

The trained machine learning model is trained to assess the anomalies detected and decide if an action is necessary and if it is, what kind of action is to be provided as information to the user and/or provided as a command. The machine learning model may be trained to the use case of the system, e.g. in case the object is a lamination belt, the machine learning model may be trained to anomalies occurring on a lamination belt. For example, the machine learning model may be trained to assess the type, size, and position of the detected anomaly and decide if an action is necessary and in case it is, which action is most appropriate.

Using the machine learning model and/or the rule-based model greatly improves the accuracy and adequacy of the decided necessary action and helps to reduce downtime of the machine the method is used on. For example, the machine often does not have to be stopped to clean the object, as it is not necessary, and the object may be cleaned in the next scheduled stop of the machine. In an exemplary case in which the object is a lamination belt, the belt only has to be stopped and cleaned out of order if the detected anomaly would affect an object to be laminated.

If the object to be recorded is a rotating belt, the anomaly detection method may be configured to recognize a full rotation of the belt, thus being able to also stop recording images or analysing these images if the full surface of the belt has been recorded and processed. Moreover, the method may be configured to recognize and record the position of recorded and/or analysed anomalies on the object. This allows to use the system to check for existence of recognized anomalies after for example a cleaning process or a repair process. The method and the used models may therefore also be configured to compare detected anomalies in at least two recordings of the same region of the object.

According to an embodiment of the invention, the method further comprises a step of adjusting the height of the contact image sensor linescan camera above the object. The step is preferably performed before the step of recording image data. The step includes adjusting the height of the CISL camera to a defined working distance from the object.

By performing this step, the method may be adapted to the height of an object to be recorded. For example, the size of the object to be recorded may change which moves the distance of the surface of the object to the CISL camera to a distance, which is outside the optimal or necessary working distance. By performing the step of adjusting the height the defined optimal working distance may be adjusted. The step may also be performed during recording of image data.

According to an embodiment of the invention, the step of deciding on the necessary action with a trained machine learning model and/or a rule-based model may be performed with the machine learning model and/or the rule-based model used to detect the anomaly. The machine learning model of such an embodiment may be trained to detect anomalies, assess them and decide on necessary actions. Moreover, a machine learning model may be used in the step of deciding on the necessary action and a rule-based model may be used to detect the anomaly. The other way around, a rule-based model may be used in the step of deciding on the necessary action and a machine learning model may be used to detect the anomaly.

According to an embodiment of the invention, the step of processing the image data comprises dividing the image data into sections and/or subsections and wherein the anomaly is detected for each section and/or subsection individually and wherein providing information on the detected anomaly to a user and/or providing information on a necessary action to a user and/or providing a command on a necessary action is based on the combined sections and/or subsections.

The embodiment allows to efficiently process the image data recorded from large objects and accelerates the step of detecting anomalies in the image data. The CISL camera records the image data as image lines in the length of the CIS (CIS scan length). The recorded image data is therefore provided in the form of number of lines x CIS scan length. As the CIS provides very high-resolution image lines and the recording length may generate a high number of recorded lines, the image data is provided in the form of a very high-resolution image. Applying models for detecting anomalies and - optionally - deciding on necessary actions on such very-high resolution image data would require a lot of processing capabilities, in particular when using machine learning models. The image data may therefore be divided into sections and/or subsections. The sections may represent a section of the recorded object. The subsection may represent a subsection of the recorded image or section in form of a tile. Such a subsection does still include high-resolution image data sufficient for detection of small anomalies but requires less processing capabilities to be processed by the respective model. As machine learning models to process image data use a convolutional neural network (CNN) which operates on a defined input resolution, the sections or subsections may possess the required defined input resolution. The image data may be resized before or after division into sections and/or subsections. The method may apply the model that processes the detected anomaly and decides on the necessary action to the results of anomaly detection of each subsection and/or section individually and may be configured to combine the results of each subsection and/or section and provide the combined information to the user. Alternatively, the method may be configured to apply the model that processes the detected anomaly and decides on the necessary action on the combined the results of the anomaly detection of each subsection and/or section.

According to an embodiment of the invention the object is a rotating belt and the step of recording the movement speed of the belt comprises: recording a motor signal of a motor which drives the belt, and/or recording the rotation speed of a rotating drum which guides and/or drives the belt, and/or recording the surface of the belt. The rotating belt may be a lamination belt.

The method therefore detects anomalies on the surface of the belt. The method may also be configured to detect anomalies on the belt and on the surface of an object arranged on the belt. Accordingly, the respective model is configured to differentiate between the belt and the object on the belt. The anomalies detected may represent defects on the belt such as glue marks, scratches or small paper residuals.

The described anomaly recognition system may be configured to perform the described anomaly detection method and the anomaly detection method may be configured to be performed on the anomaly recognition system. Naturally, the embodiments described may only perform the method or be performed on the system if technically possible. The subject-matter of the invention is not limited to the features of the individual embodiments but can also include any technically possible combination of the described embodiments which fall under the independent claims or their respective dependent claims.

In the following, preferred embodiments of the invention are described by their figures:
Fig. 1 shows a first embodiment of the anomaly detection system according to the invention;
Fig. 2 shows a second embodiment of the anomaly detection system according to the invention;
Fig. 3 shows a third embodiment of the anomaly detection system according to the invention;
Fig. 4 shows a belt on which the anomaly detection system according to any one of the first to third embodiments is used on;
Fig. 5a shows a stylized processing step performed by the system of any of the first to third embodiments with the method according to an embodiment of the invention;
Fig. 5b shows a stylized processing step performed by the system of any of the first to third embodiments with the method according to an embodiment of the invention;
Fig. 6 shows the steps of the method according to an embodiment of the invention.

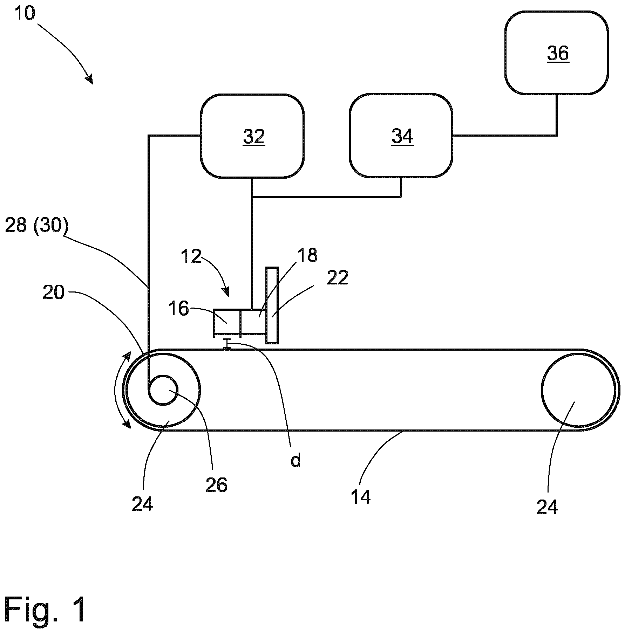

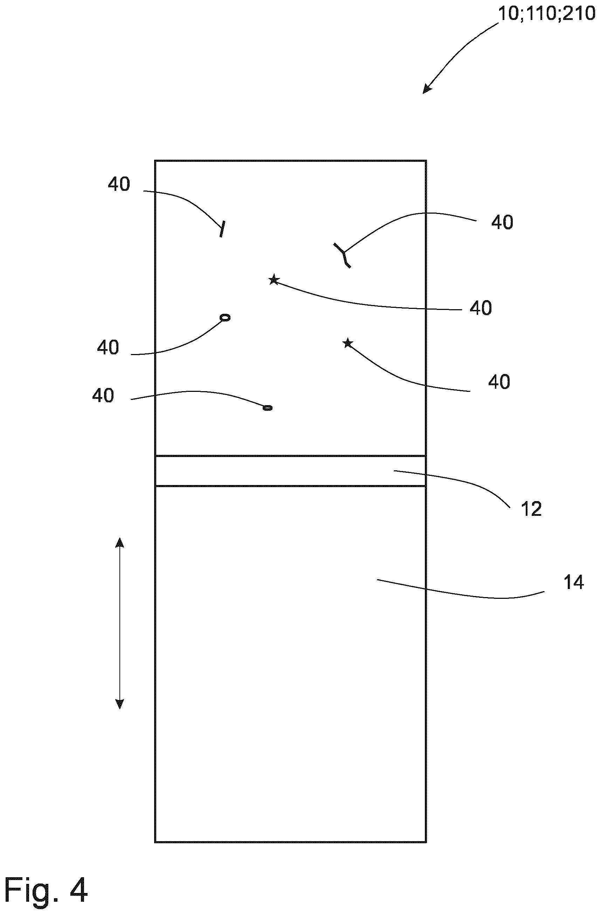

Fig. 1 shows a first embodiment of the of the anomaly detection system according to the invention. The anomaly detection system 10 comprises a contact image sensor linescan camera 12 which is arranged above an object 14. In the present embodiment, the object 14 is a lamination belt of a lamination machine, in the following it is therefore referred to as belt 14 but does not limit the embodiment to such an object. Such lamination machines include two lamination belts which transport and laminate objects such as data pages for official documents, for example for a passport. As there is a constricted space around the belts and the belt surface is reflective, conventional anomaly detection systems may not be used in such a case. The CISL camera 12 of the inventive system 10 includes a contact image sensor 16 and its own illumination means 18. It is arranged very close to the belt 14 at a distance d. In the present embodiment, the distance may for example be 12mm above the belt 14. As explained above, using a CISL camera 12 provides a number of advantages, in particular when using in a setting where the object is a reflective lamination belt. The CISL camera 12 records image data of the surface 20 of the belt 14 and is configured to extend over the whole width of the belt 14 (see fig. 4 for details). The CISL camera 12 is arranged above the belt 14 be a height adjustable mount 22. With the mount 12, the distance d can be changed so that the CISL camera 12 is always arranged at a preferred distance d to the belt 14, as explained for example 12 mm. This is particularly advantageous, as the belt 14 may change its position according to the objects to be laminated which may be comprise different thicknesses.

The belt 14 is a rotary belt which rotates around two rotating drums 24. In the present embodiment at least one of the rotating drums 24 is provided with a motor 26 to drive the belt 14, here the left rotating drum 24 is provided with the motor 26. In the present embodiment, the motor 26 provides a motor signal 28. The motor signal 28 provides information on the rotation of the motor 26 by a providing information on the angular position or angular movement, thus the motor signal 28 may be an encoder signal of an encoder of the motor. As the belt 14 is driven by the motor 26, the rotation of the motor 26 relates to a movement speed of the belt 14. Thus, the motor signal 28 constitutes an encoder 30 that records the movement speed of the belt 14.

The information on the movement speed, here in the form of the motor signal 28 is provided to a frame grabber 32. The frame grabber 32 is coupled to the encoder 30 (here in the form of the motor signal 28) and the CISL camera 12. It is configured to control the CISL camera 12 to adjust its capturing speed according to the movement speed of the belt 14. For example, if the motor 26 rotates at 10 rpm, depending on the size of the rotating drum 24 the belt 14 moves at a defined speed. Thus, a surface 20 of the belt 14 moves along a defined distance in a defined amount of time resulting in a defined speed.

The motor signal 28 returns a specific number of ticks (N) per revolution of the motor. Assuming the revolution of the motor 26 is identical to the revolution of the rotating drum 24 a variable L may be defined to be the circumference of the rotating drum 24 together with the belt 14. The movement (M) of the belt 14 is therefore defined by M = L/N.

An area of the belt 14 crosses the recording area of the CISL camera 12 with this movement. To ensure clear and non-blurred recorded image data, the frame grabber 32 controls the CISL camera 12 and may adjust its capturing speed (also defined as time resolution R) accordingly. To achieve this adjustment, the motor signal 28 may be multiplied or divided by the frame grabber 32. The corresponding multiplication factor is defined as R/M. After this operation, the frame grabber 32 can adjust the CISL camera 12 accordingly. The motor 30 may provide a fixed signal for which the number of ticks per revolution cannot be changed or it may provide a programmable signal for which the number of ticks per revolution can be programmed.

Also, if the encoder 30 provides a speed of zero, for example by no change in angular position, the frame grabber 32 controls the CISL camera 12 to stop recording image data of the surface of the belt 14. This prevents multiple recordings and subsequent anomaly detection of the same area of the object covered by the CIS 16 during a stop and helps reduce necessary amount of data to be analysed. Similarly, the motor signal 28 is used as a trigger to start the recording of image data accordingly.

The image data recorded is provided to the image processing means 34. The image processing means 34 are configured to process the image data and to detect an anomaly in the image data with a trained machine learning model and/or a rule-based model. In the following it is only referred to a machine learning model. This is simply to facilitate description, alternatively or additionally, a rule-based model may be used as described above. The image processing means are further configured to provide information on the detected anomaly on a user interface 36 and/or provide information on a necessary action on a user interface 36 and/or provide a command on a necessary action (not shown), wherein the necessary action is based on the detected anomaly.

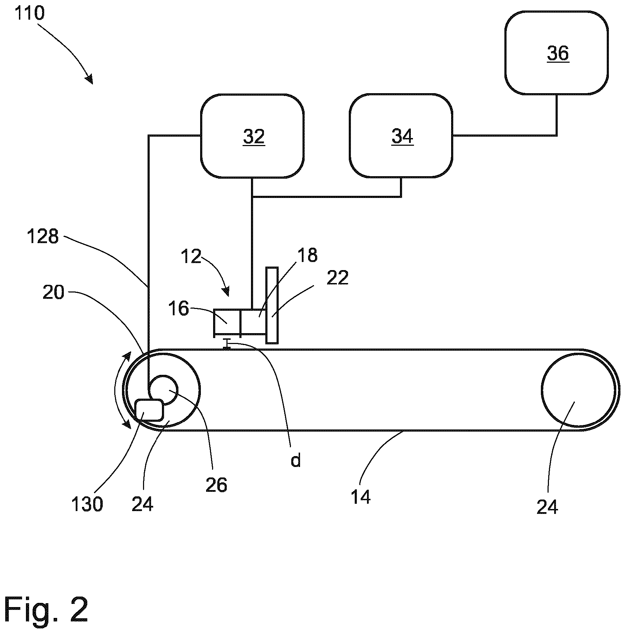

Fig. 2 shows a second embodiment of the anomaly detection system 110 according to the invention. In the following, the anomaly detection system 110 of the second embodiment is described only by its differences to the first embodiment as described, the abovesaid also applies to the system 110. The system 110 according to the second embodiment includes an encoder 130 that reads information on the angular position or angular movement of a shaft of the motor 26 and/or the rotating drum 24 by direct or indirect measurement. For example, the encoder 130 is attached to the rotating drum 24 or a shaft of the rotating drum. The encoder 130 provides a signal 128 that returns the specific number of ticks (N) per revolution of the measured shaft. The signal 128 may then be processed by the frame grabber 32 as explained above. The encoder 130 may be a fixed signal encoder for which the number of ticks per revolution cannot be changed or it may be a programmable encoder for which the number of ticks per revolution can be programmed.

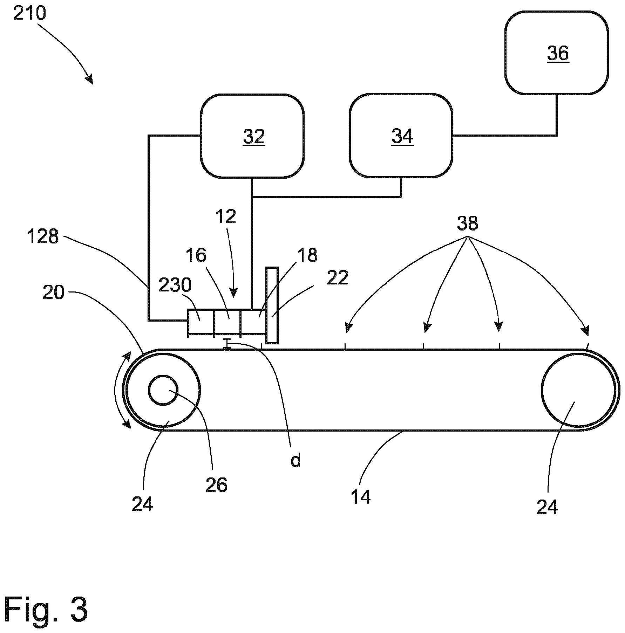

Fig. 3 shows a third embodiment of the of the anomaly detection system according to the invention. In the following, the anomaly detection system 210 of the third embodiment is described only by its differences to the first and second embodiments as described, the abovesaid also applies to the system 210. The system 210 according to the third embodiment includes an encoder 230 that is arranged above the surface 20 of the belt 14. In the present case it is also arranged by the height adjustable mount 22. The encoder 230 is configured to record the movement speed of the belt 14 from a surface 20 of the belt 14 and provide a signal 228 to the frame grabber 32. The surface 20 is provided with markings 38 (only some exemplary markings 38 are shown) to be recorded by the encoder. 230. The markings 38 are configured to correspond to the exact type of encoder 230 which may be an optical, magnetic or resistive encoder. The markings 38 may be arranged so that each marking represent a tick N as explained above. The encoder 230 may also be represented by the CISL camera 12 which also may act as the encoder 230 by recording respective markings 38 on the belt 14. In such a case, the CISL camera 12 may provide a corresponding signal 228 or information to the frame grabber 32, this may be achieved via the image processing means 34. Such a signal or information may also be represented by a certain type of detected anomalies associated with the markings 38.

Fig. 4 shows an above view on any of the systems according to an embodiment of figs. 1 to 3 on which the inventive anomaly detection method is performed. The top surface 20 of the belt 14 is shown, as it is a rotating belt, half of the recordable surface 20 is depicted. The CISL camera 12 is configured to extend across the entire width of the belt 14, it may therefore record the whole belt 14 as it is moved accordingly. The belt 14 comprises a number of anomalies 40 on its surface 20. These may represent defects such as glue marks, scratches, or paper residuals. As the belt 14 moves along under the CISL camera 12 in its normal operating procedure, the defects 40 each pass the sensor area of the CIS 16. They are subsequently recorded by the CISL camera 12 and provided as part of the image data of the surface of the belt to the image processing means 34.

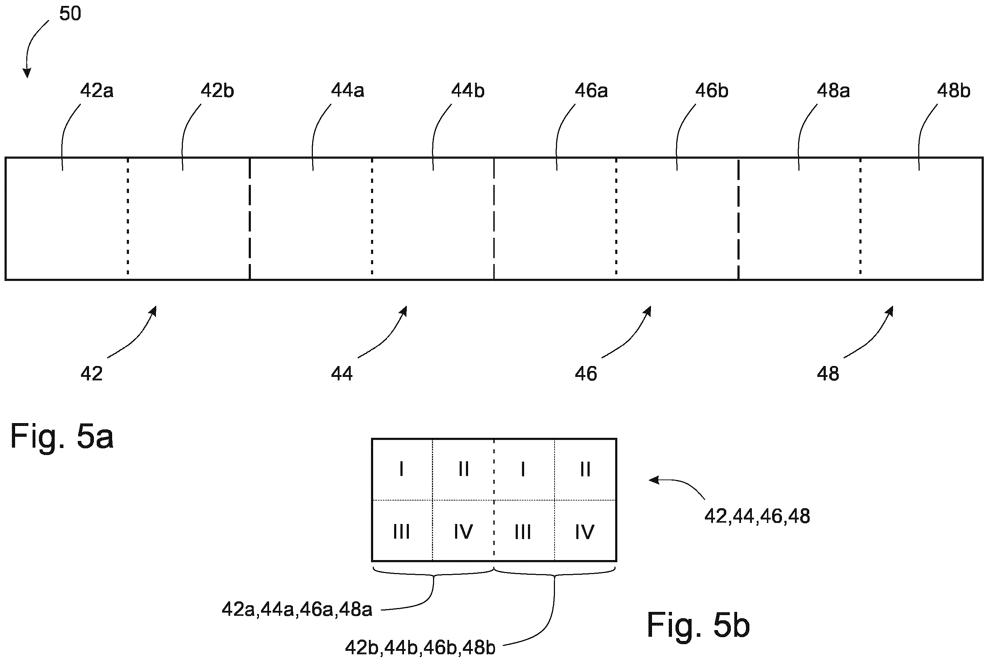

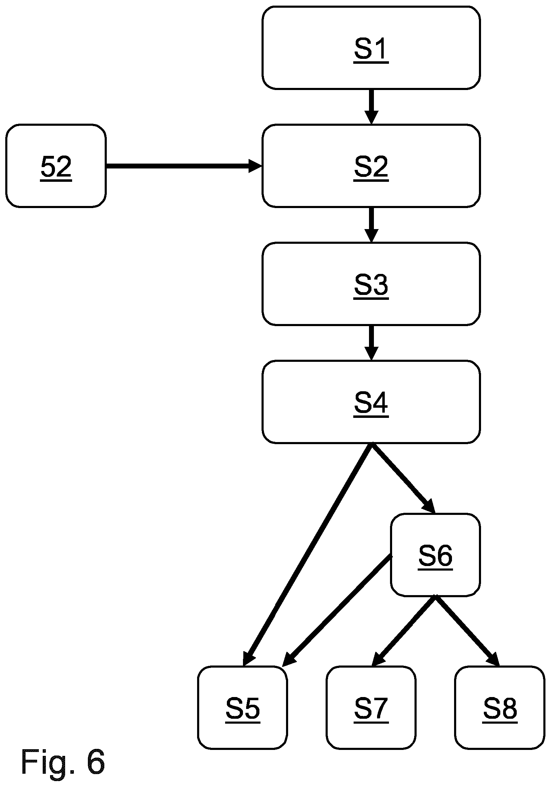

Fig. 5a shows image data 50 relating to the surface 20 of the belt 14 while processing the image data according to step S3 as shown in Fig. 6. The whole surface 20 of the belt 14 of any of the embodiments of fig. 1 to 3 is represented in the image data 50, which is therefore recorded from a whole rotation of the belt 14. This image data 50 does not need to be recorded contiguous but may be stitched together from different recording steps which may also include overlapping areas of the belt 14.

As the whole image data 50 has a very high resolution resulting from the size of the belt 14 and the resolution of the CIS 16, it may not be analysed economically by a machine learning model at once. Therefore, the image data 50 may be divided into for equal sections 42, 44, 46, 48. These may also represent four repeating sections of the surface 20 of the belt 14. To further lower the size of the image data to be analysed at once, each section is divided into a left section 42a,44a,46a,48a and right section 42b,44b,46b,48b. In other words, the image data 50 is divided into eight parts. Each section 42a,44a,46a,48a, 42b,44b,46b,48b may have a resolution of 1024x1024 pixels. To each of the sections, the models of the inventive method may be applied to. As machine learning models that process image data may use a convolutional neural network (CNN) which operates on a defined input resolution, the sections may further be divided into subsections to match the respective input resolution of the respective machine learning model applied. In the processing according to fig. 5b, each section 42a,44a,46a,48a,42b,44b,46b,48b is further divided into four equal subsections I, II, III and IV. Each subsection may for example have a resolution of 256x256 pixels. Each subsection I, II, III and IV is analysed by a trained machine learning model to detect anomalies in the image data 50 of the respective subsections I, II, III and IV as shown in fig. 5. For example, to each section 42,44,46,48 two identical machine learning models are applied simultaneously, wherein each model analyses one of the two sections 42a,44a,46a,48a,42b,44b,46b,48b related to each section 42,44,46,48. Each model analyses the subsections I to IV individually and provides the results according to the whole section 42a,44a,46a,48a,42b,44b,46b,48b. Also, the results of the sections 42,44,46,48 may be combined before output. In this case, the output of detected anomalies may include the detected anomalies of the whole image data 50.

Fig. 6 shows the steps of an embodiment of the inventive anomaly detection method. In the following, the method is described to be performed on any of the embodiments of figs. 1 to 3 but not limited thereto.

In step S1, the movement speed of an object, in this case the belt 14 is recorded. This can be achieved by different embodiments of the encoder 30, 130, 230 as described. As soon as the belt 14 moves, the frame grabber 32 can instruct the CISL camera 12 to record image data via an input signal (step S2). The recording may also be dependent on a second input signal 52, here for example by the image processing means 34. Depending on the requirements of the setting the method is used on, recording may not be necessary continuously whenever a movement is recorded in step S1. For example, recording may only be necessary in regular intervals. Also, the frame grabber 32 and/or the image processing means 34 may provide a signal that controls image recording depending on the area of the belt 14 in the recording area of the CIS 16. Depending on the movement recorded in step S1, in step S2 the capturing speed may also be adjusted to match the movement as described above.

In step S3, the recorded image data is processed, for example it may divided into sections and subsections as shown in fig. 5. A trained machine learning model is applied to the processed image data for anomaly detection (step S4). In the present embodiment, two identical machine learning models are applied to the individual sections of the image data 50 as described regarding fig. 5. The models (in the following referred to as one model because they are identical) are trained to detect anomalies in the image data which relate to anomalies 40 on the surface 20 of the belt 14. The model may for example be trained to differentiate unwanted anomalies from other anomalies relating to known features of the belt. Such unwanted anomalies relate to defects on the surface 20. The model is trained to detect such defects, classify them according to their type and size and link them to information regarding such a type from a database.

Following the detection of anomalies (step S4), the method includes different options to continue with. The detected anomalies and the respective information may be provided to a user on the user interface 36 (step S5). With this information, the user may recognize the detected defects and act accordingly, for example by changing the parameters of the lamination process the method is used on or by cleaning or changing the belt 14.

Furthermore, the detected anomalies may be processed by a machine learning model to assess them and decide if an action is necessary and in case it is, which action is the necessary action (step S6). This includes assessing the detected anomalies according to their classified type, size, and location on the belt 14. The machine learning model is preferably trained to the use situation of the method. In the present embodiment it is trained to the setting of a lamination process and trained to detect anomalies relating to the defects 40 and differentiate these defects from objects transported on the belt 14 or other anomalies present on the surface of the belt 14. Such other anomalies may be the markings 38.

The machine learning model may be applied to the image data 50 including the detected anomalies. If it is applied to the image data 50 it may be applied to individual sections as described in fig. 5. In such a case the model may also be the model used to detect the anomalies and the steps S4 an S6 are performed by the same model. Such a combination model is trained to detect the anomalies and assess them accordingly. The machine learning model of step S6 may also be trained to assess only the areas identified as anomalies by step S4 and/or asses the detected anomalies based on the results of the step S4 which include size and classification information.

If the machine learning model of step S6 decides on a necessary action, the information of necessary action may be presented to a user, in the present case via the user interface 36 (step S7). The information may include instructions on how to perform the necessary action. Based on the information, the user may therefore for example stop the machine and clean the belt 14 according to a type of detected defect or the user may repair an area of the defect. Alternatively or additionally, the method provides a command on the necessary action chosen (step S8). Such a command may be processed by the machine the method is used on, for example it may result in stopping the belt 14 and/or apply a cleaning tool to the belt 14. The method may therefore be also applied to machines without a user reacting to the detected anomalies and/or necessary actions. This further improves the usability of the inventive method.

The embodiments described and those shown in the figures can, of course, be combined with each other in any way, insofar as this is technically possible. The invention is therefore not limited to the embodiments shown but includes any combination of embodiments covered by the claims.

### List of reference signs

- d: Distance to object
- L: Circumference
- M: Movement
- N: Ticks per revolution
- R: Resolution (capturing speed)
- 10; 110; 210: Anomaly detection system
- 12: Contact image sensor linescan camera (CISL camera)
- 14: Object (belt)
- 16: Contact image line sensor (CIS)
- 18: Illumination means
- 20: Surface of object (belt)
- 22: Height adjustable mount
- 24: Rotating drum
- 26: Motor
- 28; 128; 228: Signal
- 30; 130; 230: Encoder
- 32: Frame grabber
- 34: Image processing means
- 36: User interface
- 38: Markings on the object (belt)
- 40: Anomalies on the surface 20
- 42, 44, 46, 48: Section of image data 50
- 42a,44a,46a,48a: left section of parts 42,44,46,48
- 42b,44b,46b,48b: right section of parts 42,44,46,48
- 50: Image data
- 52: Input signal
- I, II, III; IV: Subsections

## Claims

1. An anomaly recognition system (10; 110; 210), comprising
a contact image sensor linescan camera (12) to be arranged above an object (14) and configured to record image data (50) of a surface (20) of the object (14), wherein the contact image sensor linescan camera (12) includes an image sensor (16) and illumination means (18);
a height adjustable mount (22) by which at least the contact image sensor linescan camera (12) is arranged above the object (14);
an encoder (30; 130; 230) configured to record the movement speed of the object (14);
a frame grabber (32) coupled to the encoder (30; 130; 230) and the contact image sensor linescan camera (12), wherein the frame grabber (32) is configured to receive information (28; 128; 228) on the movement speed of the object (14) from the encoder (30; 130; 230), to control the contact image sensor linescan camera (12) to record image data (50) when the object (14) is moving, and to adjust a capturing speed of the contact image sensor linescan camera (12) according to the movement speed of the object (14);
image processing means (34) configured to process the image data (50) provided by the contact image sensor linescan camera (12) and to detect an anomaly (40) in the image data (50) with a trained machine learning model and/or with a rule-based model and configured to provide information on the detected anomaly (40) on a user interface (36) and/or provide information on a necessary action on a user interface (36) and/or provide a command on a necessary action, wherein the necessary action is based on the detected anomaly (40).

2. Anomaly recognition system (10; 110; 210) according to claim 1, wherein the object (14) is a rotating belt.

3. Anomaly recognition system (10; 110) according to claim 2,
wherein the encoder (30) is configured to pick up a motor signal (28) of a motor (26) which drives the belt; or
wherein the encoder (130) is coupled to a rotating drum (24) which guides and/or drives the belt.

4. Anomaly recognition system (210) according to any of the preceding claims, wherein the encoder (230) is configured to record the movement speed of the object (14) from a surface (20) of the object (14) and wherein the surface (20) is provided with markings (38) to be recorded by the encoder (230).

5. Anomaly recognition system (210) according to claim 4, wherein the encoder (230) is arranged above the object (14) by the height adjustable mount (22).

6. Anomaly recognition system (10; 110; 210) according to any of the preceding claims, wherein the image processing means (34) are configured to provide the information and/or provide the command on the necessary action by processing the detected anomaly (40) and deciding on the necessary action with a trained machine learning model and/or with a rule-based model.

7. Anomaly recognition system (10; 110; 210) according to claim 6, wherein the machine learning model and/or the rule-based model used to provide the information and/or provide the command on the necessary action is the machine learning model and/or the rule-based model used to detect the anomaly (40).

8. Anomaly recognition system (10; 110; 210) according to any of the preceding claims, wherein the anomaly (40) represents a defect on the surface (20) of the object (14).

9. Anomaly recognition system (10; 110; 210) according to any of the preceding claims, wherein the system (10; 110; 210) is configured to perform the method of any of the claims 10 to 14.

10. Anomaly detection method, comprising the steps of:
recording the movement speed of an object (step S1);
recording image data from the surface of the object with a contact image sensor linescan camera, wherein image data is recorded when the object is moving and wherein the capturing speed of the image data is adjusted according to the movement speed of the object (step S2);
processing the image data (step S3);
detecting an anomaly in the image data with a trained machine learning model and/or a rule-based model (step S4);
providing information on the detected anomaly to a user (step S5) and/or providing information on a necessary action to a user (step S7) and/or
providing a command on a necessary action (step S8), wherein the necessary action is based on the detected anomaly.

11. Anomaly detection method according to claim 10, wherein the step of providing information on the necessary action to a user (step S7) and/or the step of providing a command on the necessary action (step S8) includes processing the detected anomaly and deciding on the necessary action with a trained machine learning model and/or a rule-based model (step S6).

12. Anomaly detection method according to claim 11, wherein the machine learning model and/or the rule-based model is the machine learning model and/or the rule-based model used to detect anomalies.

13. Anomaly detection method according to any one of the claims 10 to 12, wherein the step of processing the image data (step S4) comprises dividing the image data into sections (42, 44, 46, 48) and/or subsections (I, II, III; IV) and wherein the anomaly is detected for each section (42, 44, 46, 48) and/or subsection (I, II, III; IV) individually and wherein providing information on the detected anomaly to a user and/or providing information on a necessary action to a user and/or providing a command on a necessary action is based on the combined sections (42, 44, 46, 48) and/or subsections (I, II, III; IV).

14. Anomaly detection method according to claims 10 to 13, wherein the object is a rotating belt and the step of recording the movement speed of the belt comprises: recording a motor signal of a motor which drives the belt, and/or recording the rotation speed of a rotating drum which guides and/or drives the belt, and/or recording the surface of the belt.

15. Anomaly detection method according to any one of the claims 10 to 14, wherein the method is configured to be performed on an anomaly recognition system (10; 110; 210) according to any of the claims 1 to 8.
